# EUROPÄISCHE PATENTSCHRIFT

(11) **EP 1 111 392 B1**
(45) Veröffentlichungstag und Bekanntmachung des Hinweises auf die Patenterteilung: **17.08.2005**
(21) Anmeldenummer: 00125334.3
(22) Anmeldetag: 30.11.2000
(51) Int. Cl.: G01P 3/489

(54) **Erfassen der Drehzahl und Winkelstellung eines rotierendes Rades mit anpassbarer Schaltschwelle zur Driftkompensation**
Realizing speed and angle position of a rotating wheel with adaptable switching threshold for drift compensation
Mesure du nombre de tours et position angulaire d'une roue en rotation avec seuil de couplage adapté pour compensation de dérive

(30) Priorität: 20.12.1999 DE 19961876
(43) Veröffentlichungstag der Anmeldung: 27.06.2001
(73) Patentinhaber: Micronas GmbH, 79108 Freiburg (DE)
(72) Erfinder: Blossfeld, Lothar, 79874 Breitnau (DE)
(74) Vertreter: Patentanwälte Westphal, Mussgnug & Partner

(56) Entgegenhaltungen:
- US-A- 3 801 830
- US-A- 4 764 685
- US-A- 4 835 467
- US-A- 5 103 171
- US-A- 5 446 375
- US-A- 5 497 084
- US-A- 5 554 948
- US-A- 5 917 320

## Beschreibung

Die Erfindung betrifft Verfahren zum Erfassen der Drehzahl und der Winkelstellung eines rotierenden Rades mit einem berührungslos das Rad abtastenden Sensor, der eine Impulsfolge erzeugt sowie eine entsprechender Schaltungsanordnung Ansprüche 1-5, 11.

Für elektronische Steuerungssysteme in Kraftfahrzeugen, z. B. ein Antiblockiersystem oder ein elektronisches Zündsystem, ist es erforderlich, die Drehzahl, die relative Winkelstellung eines Rades oder der Kurbelwelle und/oder deren Winkelbeschleunigung oder momentane Umdrehungsgeschwindigkeit zu messen. Hierzu ist ein Sensor, beispielsweise ein optischer Sensor oder ein Hallsensor, vorgesehen, der berührungslos das Rad oder ein auf der Kurbelwelle sitzendes Rad abtastet. Auf dem Rad sind Abtastmarken vorgesehen, die z. B. als Striche oder als Zähne ausgeführt sein können.

Die Genauigkeit der Drehzahlmessung und der ermittelten Winkelstellung wird durch externe Störsignale und/oder thermisches Rauschen beeinträchtigt. Beim Messen der Winkelstellung macht sich dieses thermische Rauschen als einen Jitter bemerkbar. Wird ein digitales Meßsystem zur Messung der Drehzahl und zur Bestimmung der Winkelstellung eingesetzt, so tritt neben dem thermischen Rauschen eine weitere das Meßergebnis verfälschende Fehlerquelle auf, die durch die minimale digitale Auflösung des LSB oder der Taktrate bestimmt wird. Üblicherweise ist der durch die minimale digitale Auflösung des LSB verursachte Meßfehler größer als der durch thermisches Rauschen verursachte Meßfehler. Ändert sich beispielsweise die Lage der Schwelle innerhalb eines Umlaufes, dann ändern sich auch die Abtastzeitpunkte zwischen den einzelnen Abtastmarken auf dem Rad, so dass von der Auswerteeinrichtung eine momentane Änderung der Umdrehungsgeschwindigkeit festgestellt wird, obgleich sich an der Umdrehungsgeschwindigkeit nichts geändert hat.

Weitere Fehlerquellen sind der Offset des Sensors und eine Langzeittrift infolge der Alterung des Sensors oder einer allmählichen Temperaturänderung im Meßumfeld, beispielsweise durch die Erwärmung des Motores.

Es ist daher Aufgabe der Erfindung, Verfahren zur Messung der Drehzahl, der Winkelbeschleunigung und zur Bestimmung der Winkelstellung eines Rades mittels eines berührungslos das Rad abtastenden Sensors so zu gestalten, dass die Drehzahl und die Winkelstellung des Rades möglichst genau gemessen werden und dass sowohl der Offset als auch die Langzeittrift infolge Alterung des Sensors oder infolge einer Temperaturänderung weitestgehend kompensiert werden.

Amplitude der Impulse wird in einem Vergleicher mit einer variablen Schaltschwelle verglichen, die so angepaßt wird, dass der Betrag der Differenz zwischen den Amplituden der impulse und der variablen Schaltschwelle einen vorgebbaren Höchstwert nicht überschreitet.

Die positive und negative Amplitude der Impulse oder deren Maximal- und Minimalwerte wird in einem Vergleicher miteiner variablen Schaltschwelle verglichen, die so angepaßt wird, dass der Betrag der Differenz zwischen den Extremwerten oder den Amplituden der Impulse und der ersten Schaltschwelle einen vorgebbaren Höchstwert nicht überschreitet.

Die Amplitude der Impulse wird in einem Vergleicher mit einer variablen Schaltschwelle verglichen, die angepaßt wird, wenn der Betrag der Differenz zwischen den Amplituden zweier aufeinanderfolgender Impulse einen vorgebbaren Höchstwert überschreitet.

Die Amplitude der Impulse wird in einem Vergleicher mit einer variablen Schaltschwelle verglichen die angepaßt wird, wenn der Betrag der Differenz der Frequenzen aufeinanderfolgender Impulse einen vorgebbaren Höchstwet überschreitet.

Es wird sichergestellt, dass die Lage der Schaltschwelle für das Sensorausgangssignal möglichst stabil und mittig zwischen dem minimalen und maximalen Sensorwert liegt.

Der Sensor tastet die Abtastmarken auf dem Rad ab. Diese Abtastmarken können beispielsweise Striche sein, die von einem optischen Sensor abgetastet werden, oder als Zähne ausgeführt sein, die von einem Hallsensor abgetastet werden. Als Synchronisationsmarke kann ein breiterer Strich, eine Zahnlücke oder ein breiterer Zahn vorgesehen sein.

Der Sensor erzeugt beim Abtasten einer Abtastmarke - eines Striches oder eines Zahnes oder einer Zahnlücke - einen Impuls oder lässt einen Impuls aus, beispielsweise bei einer Zahnlücke.

Mittels der vom Sensor gelieferten Meßwerte kann eine Auswerteschaltung die relative Winkelstellung des Rades, die augenblickliche Umdrehungsgeschwindigkeit oder die Winkelbeschleunigung bestimmen.

Die Amplitude der vom Sensor erzeugten Impulse wird mit der Schaltschwelle eines Vergleichers verglichen. Sobald der Betrag der Differenz zwischen der Amplitude der Impulse und der Schaltschwelle des Vergleichers einen vorgebbaren Höchstwert überschreitet, wird die Schaltschwelle so angepaßt, dass diese Differenz wieder unter den vorgebbaren Höchstwert sinkt. Ist die Amplitude der vom Sensor erzeugten Impulse größer als die Schaltschwelle, wird die Schaltschwelle erhöht, dagegen wird sie erniedrigt, wenn die Amplitude der Impulse kleiner ist als die Schaltschwelle.

Die positive und die negative Amplitude der Impulse oder deren Maximal- und Minimalwerte wird in einem Vergleicher mit einer variablen Schaltschwelle verglichen, die so angepaßt wird, dass der Betrag der Differenz zwischen den Extremwerten oder den Amplituden der Impulse und der variablen Schaltschwelle einen vorgebbaren Höchstwert nicht überschreitet.

Die Amplituden zweier aufeinanderfolgender Impulse des Sensors werden miteinander verglichen. Wenn die Differenz der beiden Amplituden einen vorgebbaren Höchstwert erreicht, wird die Schaltschwelle des Vergleichers angepaßt. Liegt die Amplitude des zweiten Impulses über der des ersten Impulses, so wird die Schaltschwelle erhöht, während sie erniedrigt wird, wenn die Amplitude des zweiten Impulses unter der des ersten Impulses liegt.

Die Frequenzen aufeinanderfolgender Impulsfolgen werden bestimmt. Wenn die Differenz der Frequenzen zweier aufeinanderfolgender Impulsfolgen, die z. B. nur aus zwei Impulsen bestehen können, einen vorgebbaren Höchstwert überschreiten, wird die Schaltschwelle des Vergleichers angepaßt. Unterhalb dieser Frequenz ist die Drehzahl zu gering, beispielsweise im Startfall, so dass eine Anpassung der Schaltschwellen für den Sensor nicht sinnvoll ist. Ist die Drehzahl jedoch ausreichend hoch, dann kann die Schaltwelle nach einer der bereits beschriebenen Lösungen angepasst werden.

Die vorgesehenen Bedingungen zur An passung der Schaltschwelle des Vergleichers können beliebig miteinander konjunktiv verknüpft werden.

Eine weitere Ausgestaltung der erfindungsgemäßen Verfahren sieht vor, dass eine Anpassung der Schaltschwelle des Vergleichers erst ab einer bestimmten Drehzahl des Rades durchgeführt wird.

Eine weitere Ausgestaltung der drei erfindungsgemäßen Verfahren sieht vor, die Anpassung der Schaltschwelle des Vergleichers nur während des Synchronsignals durchzuführen. Selbstverständlich können auch diese Bedingungen beliebig konjunktiv miteinander verknüpft sein.

So müssen beispielsweise bei einer weiteren Ausgestaltung der Erfindung folgende Bedingungen gleichzeitig erfüllt sein:
1. Die Differenz zwischen den Impulsamplituden und der Schaltschwelle überschreitet einen ersten vorgebbaren Schwellwert.
2. Die Differenz der Amplituden aufeinanderfolgender Impulse überschreitet einen zweiten vorgebbaren Höchstwert.
3. Die Differenz der Frequenzen aufeinanderfolgender Impulse überschreitet einen dritten vorgebbaren Höchstwert.
4. Die Drehzahl des Rades liegt über einem vorgegebenen Mindestwert.
5. Es wird ein Synchronsignal erzeugt.

Die oben angeführten Bedingungen lassen sich natürlich beliebig miteinander kombinieren.

Durch die erfindungsgemäße Anpassung der Schaltschwelle wird die Meßgenauigkeit erheblich verbessert. Außerdem werden der Offset und die Langzeitdift des Sensors infolge Alterung weitestgehend kompensiert.

In den Figuren sind Schaltungsanordnungen zur Durchführung der erfindungsgemäßen Verfahren abgebildet.

In der Zeichnung zeigen:
- Figur 1: eine Schaltungsanordnung
- Figur 2: eine weitere Schaltungsanordnung
- Figur 3: eine Schaltungsanordnung zur Durchführung eines der angegebenen Verfahren.

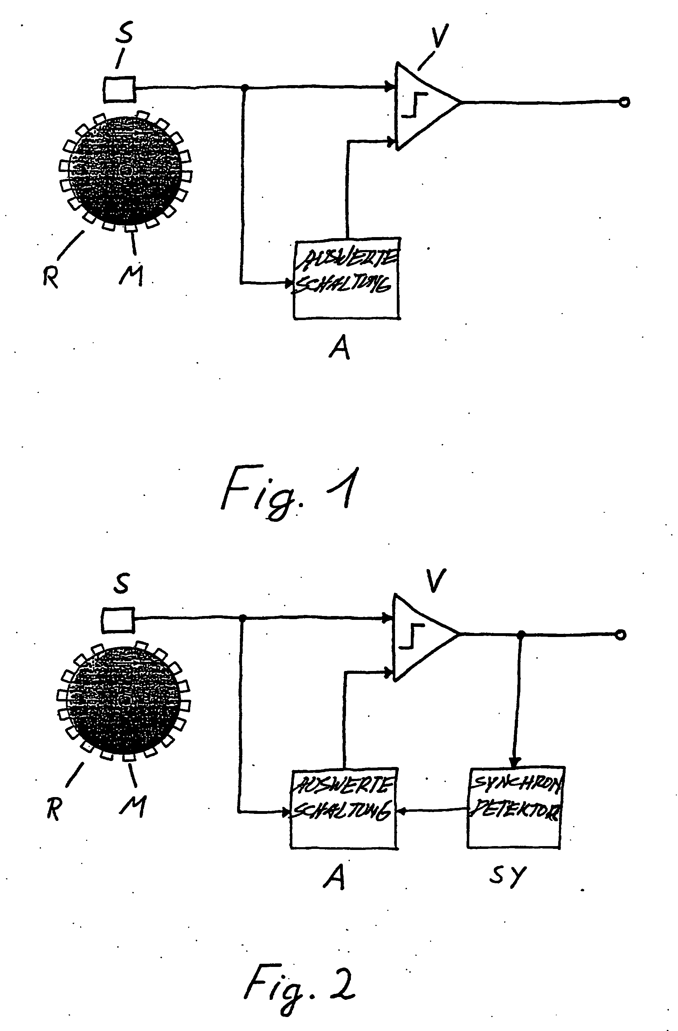

Es wird nun die in der Figur 1 gezeigte Schaltungsanordnung beschrieben und erläutert.

Der Ausgang eines Sensors S, der die Abtastmarken M eines Rades R abtastet, ist mit dem ersten Eingang eines Vergleichers V und einer Auswerteschaltung A verbunden, deren Ausgang mit dem zweiten Ausgang des Vergleichers V verbunden ist.

In der Auswerteschaltung A werden die Amplituden der vom Sensor S erzeugten Impulse mit der Schaltschwelle des Vergleichers V verglichen. Wenn die Differenz zwischen der Amplitude der Impulse und der Schaltschwelle den vorgebbaren Höchstwert überschreitet, paßt die Auswerteschaltung A die Schaltschwelle an.

In der Auswerteschaltung A können aber auch die Amplituden aufeinanderfolgender Impulse, die vom Sensor S erzeugt werden, miteinander verglichen werden. Liegt die Differenz der Amplituden zweier aufeinanderfolgender Impulse über einem vorgebbaren Höchstwert, so paßt die Auswerteschaltung A die Schaltschwelle an. In der Auswerteschaltung A können auch die beiden beschriebenen Bedingungen konjunktiv miteinandern verknüpft sein.

In der Figur 2 ist eine weitere Schaltungsanordnung gezeigt, die durch einen Synchrondetektor SY ergänzt ist. Der Ausgang des Vergleichers V ist mit dem Eingang des Synchrondetektors SY verbunden, dessen Ausgang mit dem zweiten Eingang der Auswerteschaltung A verbunden ist.

Die Auswerteschaltung A paßt die Schaltschwelle nur dann an, wenn die vorgesehenen Bedingungen erfüllt sind und der Synchrondetektor SY gleichzeitig ein Synchronsignal detektiert.

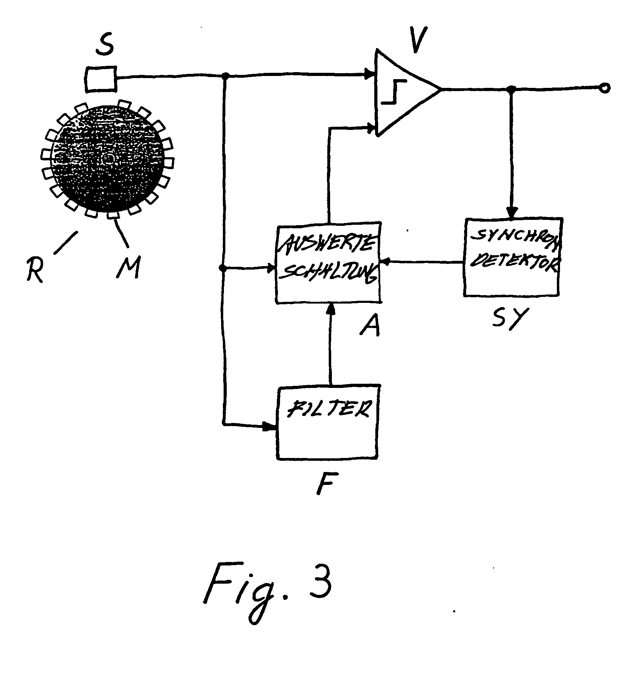

In der Figur 3 ist eine dritte Schaltungsanordnung gezeigt, die geeignet ist, alle beschriebenen erfindungsgemäßen Verfahren durchzuführen.

Sie unterscheidet sich von der in Figur 2 gezeigten Schaltungsanordnung durch ein Filter F, dessen Eingang mit dem Ausgang des Sensors S und dessen Ausgang mit dem dritten Eingang der Auswerteschaltung A verbunden ist.

Die in der Figur 3 abgebildete Schaltungsanordnung kann die Anpassung der Schaltschwelle wahlweise nach einer oder mehreren der angegebenen Bedingungen durchführen.

Die Erfindung ist insbesondere zum Einsatz in einem Kraftfahrzeug geeignet, wo sie beispielsweise die Drehzahl und die Winkelstellung der Kurbelwelle genau für ein elektronisches Zündsystem, die Drehzahl und die Winkelstellung der einzelnen Räder für ein Antiblockiersystem, für eine Antischlupfregelung oder ein Fahrstabilisierungssystem ermittelt.

## Patentansprüche

1. Verfahren zum Erfassen der Drehzahl eines Rades (R) mittels eines das Rad (R) berührungslos abtastenden Sensors (S), der eine Impulsfolge erzeugt, wobei die Amplituden der Impulse in einem Vergleicher (V) mit einer variablen Schaltschwelle verglichen werden, **dadurch gekennzeichnet, dass** die Schaltschwelle angepasst wird, wenn der Betrag der Differenz zwischen den Amplituden der Impulse und der Schaltschwelle einen vorgebbaren ersten Höchstwert überschreitet und gleichzeitig der Betrag der Differenz der Amplituden zweier aufeinander folgender Impulse einen zweiten Höchstwert überschreitet.

2. Verfahren zum Erfassen der Drehzahl eines Rades (R) mittels eines das Rad (R) berührungslos abtastenden Sensors (S), der eine Impulsfolge erzeugt, wobei die Amplituden der Impulse in einem Vergleicher (V) mit einer variablen Schaltschwelle verglichen werden, **dadurch gekennzeichnet, dass** die Amplitude der Impulse in einem Vergleicher (V) mit einer variablen Schaltschwelle verglichen wird, die angepasst wird, wenn der Betrag der Differenz der Frequenzen aufeinander folgender Impulse einen vorgebbaren dritten Höchstwert überschreitet.

3. Verfahren zum Erfassen der Drehzahl eines Rades (R) mittels eines das Rad (R) berührungslos abtastenden Sensors (S), der eine Impulsfolge erzeugt, wobei die Amplituden der Impulse in einem Vergleicher (V) mit einer variablen Schaltschwelle verglichen werden, **dadurch gekennzeichnet, dass** die Schaltschwelle angepasst wird, wenn der Betrag der Differenz zwischen den Amplituden der Impulse und der Schaltschwelle einen vorgebbaren ersten Höchstwert überschreitet und gleichzeitig der Betrag der Differenz der Frequenzen zweier aufeinander folgender Impulse einen dritten Höchstwert überschreitet.

4. Verfahren zum Erfassen der Drehzahl eines Rades (R) mittels eines das Rad (R) berührungslos abtastenden Sensors (S), der eine Impulsfolge erzeugt, wobei die Amplituden der Impulse in einem Vergleicher (V) mit einer variablen Schaltschwelle verglichen werden, **dadurch gekennzeichnet, dass** die Schaltschwelle angepasst wird, wenn der Betrag der Differenz der Amplituden zweier aufeinanderfolgender Impulse einen zweiten Höchstwert überschreitet und gleichzeitig der Betrag der Differenz der Frequenzen aufeinanderfolgender Impulse einen vorgebbaren dritten Höchstwert überschreitet.

5. Verfahren zum Erfassen der Drehzahl eines Rades (R) mittels eines das Rad (R) berührungslos abtastenden Sensors (S), der eine Impulsfolge erzeugt, wobei die Amplituden der Impulse in einem Vergleicher (V) mit einer variablen Schaltschwelle verglichen werden, **dadurch gekennzeichnet, dass** die Schaltschwelle angepasst wird, wenn der Betrag der Differenz zwischen den Amplituden der Impulse und der Schaltschwelle eine vorgebbaren ersten Höchstwert überschreitet und gleichzeitig der Betrag der Differenz der Amplituden zweier aufeinanderfolgender Impulse einen zweiten Höchstwert überschreitet und gleichzeitig der Betrag der Differenz der Frequenzen aufeinanderfolgender Impulse einen vorgebbaren dritten Höchstwert überschreitet.

6. Verfahren nach einem der vorangehenden Ansprüche, d a-durch **gekennzeichnet**, dass eine Auswerteschaltung (A) mittels der vom Sensor (5) empfangenen Impulse die relative Winkelstellung des Rades, die augenblickliche Umdrehungsgeschwindigkeit oder die Winkelbeschleunigung bestimmt.

7. Verfahren nach einem der vorangehenden Ansprüche, d a-durch **gekennzeichnet**, dass die Schaltschwelle erhöht wird, wenn die Differenz der Amplituden positives Vorzeichen hat, dagegen erniedrigt wird, wenn sie negatives Vorzeichen hat.

8. Verfahren nach einem Ansprüche 2 bis 7, **dadurch ge-kennzeichnet, dass** die Schaltschwelle erhöht wird, wenn die Differenz der Frequenzen positives Verhalten hat, dagegen erniedrigt wird, wenn sie negatives Vorzeichen hat.

9. Verfahren nach einem der vorangehenden Ansprüche, d a-durch **gekennzeichnet**, dass eine vom Sensor (S) abtastbare Synchronmarke auf dem Rad (R) vorgesehen ist, aus der der Sensor (S) ein Synchronsignal ableitet.

10. Verfahren nach Anspruch 9, **dadurch gekenn-zeichnet, dass** die Schaltschwelle angepasst wird, wenn der Sensor (S) das Synchronsignal erzeugt.

11. Schaltungsanordnung bei der der Ausgang eines das Rad (R) berührungslos abtastenden Sensors (S) mit dem ersten Eingang eines Vergleichers (V) und einer Auswerteschaltung (A) verbunden ist, deren Ausgang mit dem zweiten Eingang des Vergleichers (V) verbunden ist, dass der Ausgang des Vergleichers (V) mit dem Eingang eines Synchrondetektors (SY) verbunden ist, dessen Ausgang an den zweiten Eingang der Auswerteschaltung (A) angeschlossen ist, und dass der Ausgang des Sensors (S) mit dem Eingang des Filters (F) verbunden ist, dessen Ausgang mit dem dritten Eingang der Auswerteschaltung (A) verbunden ist.

12. Verfahren oder Schaltungsanordnung nach einem der vorangehenden Ansprüche, **dadurch** gekenn- zeichnet, dass für den Sensor (S) ein optischer Sensor oder ein Hallsensor vorgesehen ist.

## Claims

1. A method for detecting the speed of a wheel (R) by means of a sensor (S) that scans the wheel (R) without contact and generates a sequence of pulses, whereby the amplitude of the pulses are compared in a comparator (V) with a variable switching threshold,
**characterised in that** the switching threshold is adapted when the amount of the difference between the amplitude of the pulses and the switching threshold exceeds a predeterminable first maximum value and simultaneously the amount of the difference of the amplitudes of two successive pulses exceeds a second maximum value.

2. A method for detecting the speed of a wheel (R) by means of a sensor (S) that scans the wheel (R) without contact and generates a sequence of pulses, whereby the amplitudes of the pulses are compared in a comparator (V) with a variable switching threshold,
**characterised in that** the amplitude of the pulses is compared in a comparator (V) with a variable switching threshold, which is adapted when the amount of the difference of the frequencies of successive pulses exceeds a predeterminable third maximum value.

3. A method for detecting the speed of a wheel (R) by means of a sensor (S) that scans the wheel (R) without contact and generates a sequence of pulses, whereby the amplitudes of the pulses are compared in a comparator (V) with a variable switching threshold,
**characterised in that** the switching threshold is adapted when the amount of the difference between the amplitudes of the pulses and of the switching threshold exceeds a predeterminable first maximum value and simultaneously the amount of the difference of the frequencies of two successive pulses exceeds a third maximum value.

4. A method for detecting the speed of a wheel (R) by means of a sensor (S) scanning the wheel (R) without contact, which generates a sequence of pulses, whereby the amplitudes of the pulses are compared in a comparator (V) with a variable switching threshold,
**characterised in that** the switching threshold is adapted when the amount of the difference of the amplitudes of two successive pulses exceeds a second maximum value and simultaneously the amount of the difference of the frequencies of successive pulses exceeds a predeterminable third maximum value.

5. A method for detecting the speed of a wheel (R) by means of a sensor (S) that scans the wheel (R) without contact and generates a sequence of pulses, whereby the amplitudes of the pulses are compared in a comparator (V) with a variable switching threshold,
**characterised in that** the switching threshold is adapted when the amount of the difference between the amplitude of the pulses and of the switching threshold exceeds a predeterminable first maximum value and simultaneously the amount of the difference of the amplitudes of two successive pulses exceeds a second maximum value and simultaneously the amount of the difference of the frequencies of successive pulses exceeds a predeterminable third maximum value.

6. A method according to one of the preceding Claims,
**characterised in that** an evaluation circuit (A) determines the relative angle position of the wheel, the instantaneous rotational speed or the angular acceleration by means of the pulses received by the sensor (S).

7. A method according to one of the preceding Claims,
**characterised in that** the switching threshold is increased when the difference of the amplitudes has a positive sign, but is decreased when it has negative sign.

8. A method according to one of Claims 2 to 7,
**characterised in that** the switching threshold is increased when the difference of the frequencies has a positive behaviour, but is reduced when it has a negative sign.

9. A method according to one of the preceding Claims,
**characterised in that** a synchronising mark that can be scanned by the sensor (S) is provided on the wheel (R), from which the sensor (S) derives a synchronising signal.

10. A method according to Claim 9,
**characterised in that** the switching threshold is adapted if the sensor (S) generates the synchronising signal.

11. A circuit configuration in which the output of a sensor (S) scanning the wheel (R) without contact is connected to the first input of a comparator (V) and of an evaluation circuit (A), the output of which is connected to the second input of the comparator (V),
in that the output of the comparator (V) is connected to the input of a synchronising detector (SY), the output of which is connected to the second input of the evaluation circuit (A),
and in that the output of the sensor (S) is connected to the input of the filter (F), the output of which is connected to the third output of the evaluation circuit (A).

12. A method or circuit configuration according to one of the preceding Claims,
**characterised in that** an optical sensor or a Hall sensor is provided for the sensor (S).

## Revendications

1. Procédé de mesure de la vitesse de rotation d'une roue (R) au moyen d'un capteur (S) balayant sans contact la roue (R) et qui génère une séquence d'impulsions, les amplitudes des impulsions étant comparées dans un comparateur (V) avec un seuil de commutation variable,
**caractérisé en ce que**
le seuil de commutation variable est adapté lorsque la valeur de la différence entre les amplitudes des impulsions et le seuil de commutation dépasse une première valeur maximale prédéterminée et simultanément, la valeur de la différence entre les amplitudes de deux impulsions successives dépasse une deuxième valeur maximale.

2. Procédé de mesure de la vitesse de rotation d'une roue (R) au moyen d'un capteur (S) balayant sans contact la roue (R) et qui génère une séquence d'impulsions, les amplitudes des impulsions étant comparées dans un comparateur (V) avec un seuil de commutation variable,
**caractérisé en ce que**
l'amplitude des impulsions est comparée dans un comparateur (V) avec un seuil de commutation variable qui est adapté lorsque la valeur de la différence entre les fréquences d'impulsions successives dépasse une troisième valeur maximale prédéterminée.

3. Procédé de mesure de la vitesse de rotation d'une roue (R) au moyen d'un capteur (S) balayant sans contact la roue (R) et qui génère une séquence d'impulsions, les amplitudes des impulsions étant comparées dans un comparateur M avec un seuil de commutation variable,
**caractérisé en ce que**
le seuil de commutation est adapté lorsque la valeur de la différence entre les amplitudes des impulsions et le seuil de commutation dépasse une première valeur maximale prédéterminée et simultanément, la valeur de la différence entre les fréquences de deux impulsions successives dépasse une troisième valeur maximale.

4. Procédé de mesure de la vitesse de rotation d'une roue (R) au moyen d'un capteur (S) balayant sans contact la roue (R) et qui génère une séquence d'impulsions, les amplitudes des impulsions étant comparées dans un comparateur (V) avec un seuil de commutation variable,
**caractérisé en ce que**
le seuil de commutation est adapté lorsque la valeur de la différence entre les amplitudes de deux impulsions successives dépasse une deuxième valeur maximale et simultanément, la valeur de la différence entre les fréquences d'impulsions successives dépasse une troisième valeur maximale prédéterminée.

5. Procédé de mesure de la vitesse de rotation d'une roue (R) au moyen d'un capteur (S) balayant sans contact la roue (R) et qui génère une séquence d'impulsions, les amplitudes des impulsions étant comparées dans un comparateur (V) avec un seuil de commutation variable,
**caractérisé en ce que**
le seuil de commutation est adapté lorsque la valeur de la différence entre les amplitudes des impulsions et le seuil de commutation dépasse une première valeur maximale pouvant être prédéterminée et simultanément, la valeur de la différence entre les amplitudes de deux impulsions successives dépasse une deuxième valeur maximale et simultanément, la valeur de la différence entre les fréquences de deux impulsions successives dépasse une troisième valeur maximale prédéterminée.

6. Procédé selon l'une des revendications précédentes,
**caractérisé en ce qu'**
un circuit d'exploitation (A) détermine, au moyen des impulsions reçues par le capteur (S), la position angulaire relative de la roue, la vitesse de rotation momentanée ou l'accélération angulaire.

7. Procédé selon l'une des revendications précédentes,
**caractérisé en ce que**
le seuil de commutation est augmenté lorsque la différence entre les amplitudes est positive, et est réduit lorsqu'elle est négative.

8. Procédé selon l'une des revendications 2 à 7,
**caractérisé en ce que**
le seuil de commutation est augmenté lorsque la différence entre les fréquences est positive, et réduit lorsqu'elle est négative.

9. Procédé selon l'une des revendications précédentes,
**caractérisé en ce que**
la roue (R) comporte un repère de synchronisation balayé par le capteur (S), et à partir duquel le capteur (S) dérive un signal de synchronisation.

10. Procédé selon la revendication 9,
**caractérisé en ce que**
le seuil de commutation est adapté lorsque le capteur (S) génère le signal de synchronisation.

11. Circuit, dans lequel la sortie d'un capteur (S) balayant sans contact la roue (R) est reliée à la première entrée d'un comparateur (V) et à un circuit d'exploitation (A), dont la sortie est reliée à la deuxième entrée du comparateur (V),
la sortie du comparateur (V) est reliée à l'entrée d'un détecteur de synchronisation (SY) dont la sortie est reliée à la deuxième entrée du circuit d'exploitation (A), et
la sortie du capteur (S) est reliée à l'entrée du filtre (F) dont la sortie est reliée à la troisième entrée du circuit d'exploitation (A).

12. Procédé ou circuit selon l'une des revendications précédentes,
**caractérisé en ce que**
le capteur (S) est un capteur optique ou un capteur à effet Hall.
